Europäisches Patentamt

European Patent Office

Office européen des brevets

(11) Publication number: **0 141 545**
**B1**

# (12) EUROPEAN PATENT SPECIFICATION

(45) Date of publication of patent specification: **25.05.88**

(51) Int. Cl.⁴: **F 16 H 35/00, B 41 J 11/32**

(21) Application number: **84306868.5**

(22) Date of filing: **08.10.84**

(54) **Drive system for imparting translational motion to a plurality of pairs of elements.**

(30) Priority: **24.10.83 US 545014**

(43) Date of publication of application:
**15.05.85 Bulletin 85/20**

(45) Publication of the grant of the patent:
**25.05.88 Bulletin 88/21**

(84) Designated Contracting States:
**DE FR GB**

(56) References cited:
**CH-A- 416 686**
**FR-A- 469 881**
**GB-A-1 138 966**
**US-A-3 367 459**

**KURT RABE "Getriebe der Feinwerktechnik" 1st edition Gleichförmig übersetzende Getriebe 1961, C.F. WINTER'SCHE VERLAGSHANDLUNG, Prien**

(73) Proprietor: **Hewlett-Packard Company**
**Mail Stop 20 B-O 3000 Hanover Street**
**Palo Alto California 94304 (US)**

(72) Inventor: **Gysling, Peter**
**1002 N. 22nd.**
**Boise Idaho 83702 (US)**

(74) Representative: **Liesegang, Roland, Dr.-Ing.**
**FORRESTER & BOEHMERT Widenmayerstrasse**
**4 Postfach 22 01 37**
**D-8000 München 22 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

# Description

This invention relates generally to high-speed printers and more particularly to a drive system comprising the features of the first part of claim 1, as known from GB—A—1138966.

High-speed printers employed as terminal printers for computer readout and word processing systems generally utilize a continuous paper feed system. A tractor system, driven by a stepper motor, engages perforations provided along each edge of the print paper and steps the print paper past the printing mechanism. In addition, the tractors serve to center the paper in the printer and to guide the paper as it is stepped through the printer. In printers utilizing more than one tractor for each edge of the paper, it is necessary to keep the upper and lower tractors on each edge of the paper precisely aligned to prevent skewing and consequential jamming or tearing of the print paper.

The Hewlett-Packard Model 2619A printer tractor system utilizes two pairs of tractors, each pair consisting of an upper and a lower tractor, one pair for each edge of the print paper. Each tractor is mounted on an individual lead screw and the two lead screws corresponding to each pair of tractors are linked to a reversible motor by means of a non-slipping drive such as a cog belt. Limit switches are provided to prevent overdriving the tractor pairs and consequential damage to the drive motors. While this system is highly satisfactory, it does require either two motors or one motor with a rather complex shifting mechanism which adds to the cost thereof. In addition, to facilitate removal of the tractors, the entire lead screw assembly has to be disassembled.

Other printers utilize a manually operatable cable system wherein each tractor is mounted on a cable and each pair of upper and lower tractors is linked together by a belt and pulley system. The primary disadvantage of this system is that the relative alignment between the upper and lower tractors is difficult to maintain because of cable slippage on the pulleys. Dirt or other foreign matter in the system creates enough drag to result in cable slippage. Any stretch in the cables has to be compensated for by manual (turnbuckle) adjustment. As in other prior solutions, it is difficult to remove the tractors from the drive system.

Cable systems to provide translational and/or rotational motion to a moving element are well known in the prior art. U.S. Patent Specification No. 3926061 teaches a drive system in which a pair of fixedly mounted motors impart simultaneous and independent rotational and translational motion to a disc such as a print disc containing a character font.

It is also well known to utilize cable and pulley configurations in other applications. One such application consists of a cable in a figure-of-eight configuration (e.g. K. Rabe: Getriebe der Feinwerktechnik, 1961, Prien, S. 120, 121) mounted on a drafting table by pulleys at each corner of the drafting table. The opposite ends of a straightedge are coupled to opposite sides of the figure-of-eight in such a manner that the straightedge is maintained parallel with respect to a reference, usually one edge of the drafting table, when it is repositioned on the drafting table.

The present invention provides a drive system for imparting translational motion to a plurality of pairs of elements as specified in claim 1.

Further features of the invention are disclosed in the subclaims.

In accordance with the preferred embodiment, the present invention provides a drive system in which a fixedly mounted drive mechanism such as a reversible motor is utilized to position two, left-hand and right-hand, pairs of tractors in a high-speed printer. Each pair of tractors includes an upper and a lower tractor for engaging one edge of a continuous web element such as continuous print paper for a high-speed printer, and is mounted on a continuous cable loop arranged in a figure-of-eight configuration such that when one of the tractors is moved, the other tractor will move through the same distance in the same direction as the first tractor while maintaining relative alignment with respect to the first tractor. The cables are guided by pulleys with common centers which are rigidly mounted on the printer main frame. Two drive pulleys, coupled to the motor by a common shaft, are positioned such that the drive pulleys are tangential to the cables along a single reach of the cable. Each cable is double wound around its respective drive pulley coupling the cables to the drive motor whereby rotational motion of the drive motor shaft provides translational motion of the tractor pairs. A spring is inserted in each figure-of-eight loop to provide tension and to compensate for any stretching of the cable. The spring also allows for greater tolerance on the pulleys and cable assemblies and eases assembly.

A spring-loaded cable idler mechanism is provided to release the tension on one cable thereby allowing one pair of tractors to be positioned independently of the other pair to adjust the horizontal distance between the pairs of tractors in order to utilize print paper of differing widths. Once the tractors are adjusted for print paper width, both pairs of tractors may be moved together to center the print paper in the printer. The cable idler mechanism also includes a cable brake to ensure that one pair of tractors remains stationary while the print paper width adjustment is accomplished.

In accordance with another embodiment of the invention, two drive pulleys are coupled to the drive motor such that a first pulley is directly coupled to the motor shaft while the second pulley is coupled to the motor through a clutch. Engagement of the clutch enables the motor to position both pairs of tractors simultaneously. When the clutch is disengaged, one cable is not coupled to the motor permitting one pair of tractors to be positioned independently of the other pair to adjust for print paper of differing widths.

There now follows a detailed description which is to be read with reference to the accompanying drawings of a high-speed printer drive system according to the present invention; it is to be clearly understood that the system has been selected for description to illustrate the invention by way of example and not by way of limitation.

In the accompanying drawings:—

Figure 1 is a perspective view of a printer system employing a tractor positioning system embodying the present invention;

Figure 2 illustrates the basic figure-of-eight shaped cable configuration employed in the tractor positioning system of Figure 1;

Figure 3 illustrates a cable configuration which positions two pairs of tractors utilizing one motor employed in the tractor positioning system of Figure 1;

Figure 4 illustrates the cable wrap on a two-pulley motor shaft employed in the tractor positioning system of Figure 1;

Figure 5 illustrates an embodiment of the invention utilizing a spring-loaded idler arm employed in the tractor positioning system of Figure 1;

Figure 6 illustrates the spring-loaded idler arm and cable brake mechanism employed in the tractor positioning system of Figure 1;

Figure 7 illustrates the attachment of the tractor bracket to the cable employed in the tractor positioning system of Figure 1; and

Figure 8 illustrates another embodiment of the invention utilizing a drive pulley clutch mechanism.

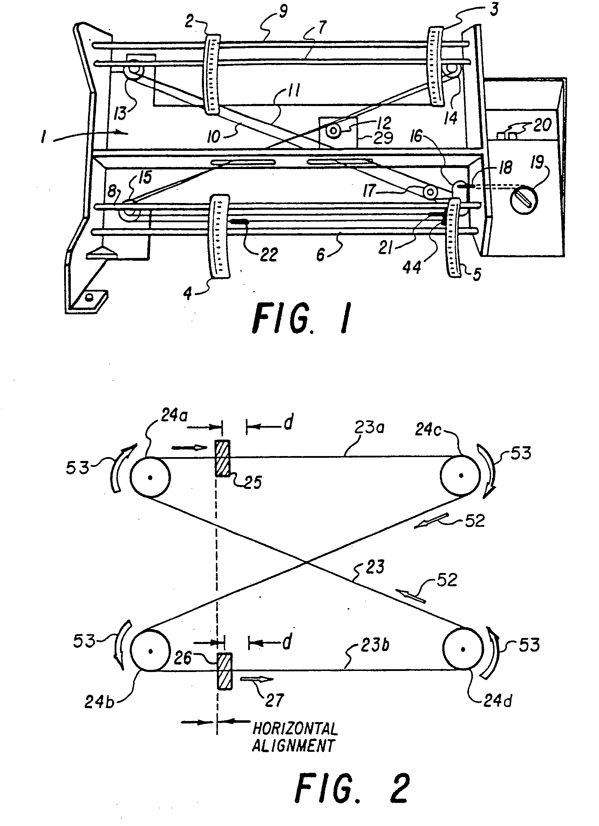

The preferred embodiment of the present invention is described in conjunction with a high-speed printer as illustrated in Figure 1. The invention is not limited to the particular printer shown, but it will be understood by those skilled in the art that the invention can be utilized in any application where it is desired to position at least one pair of movable elements while maintaining a relative alignment between the movable elements comprising that pair of elements and the distance between pairs of elements.

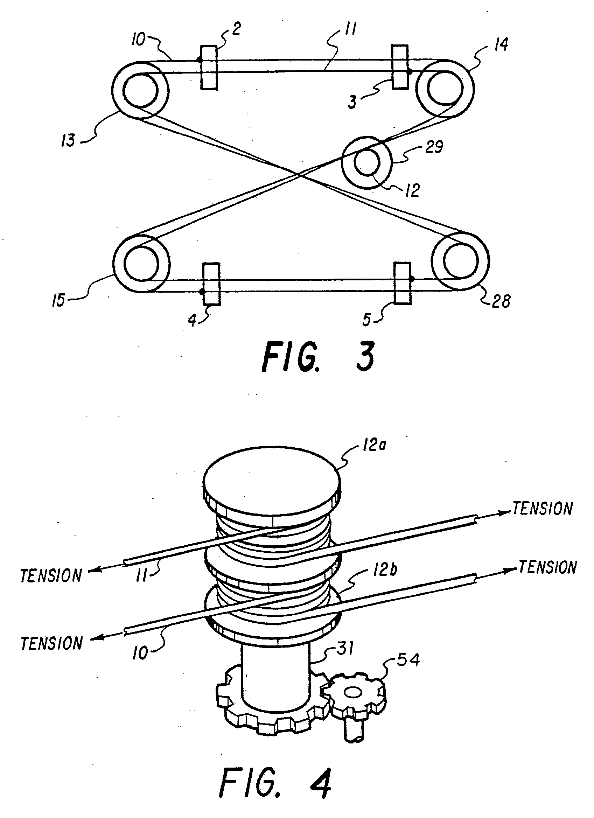

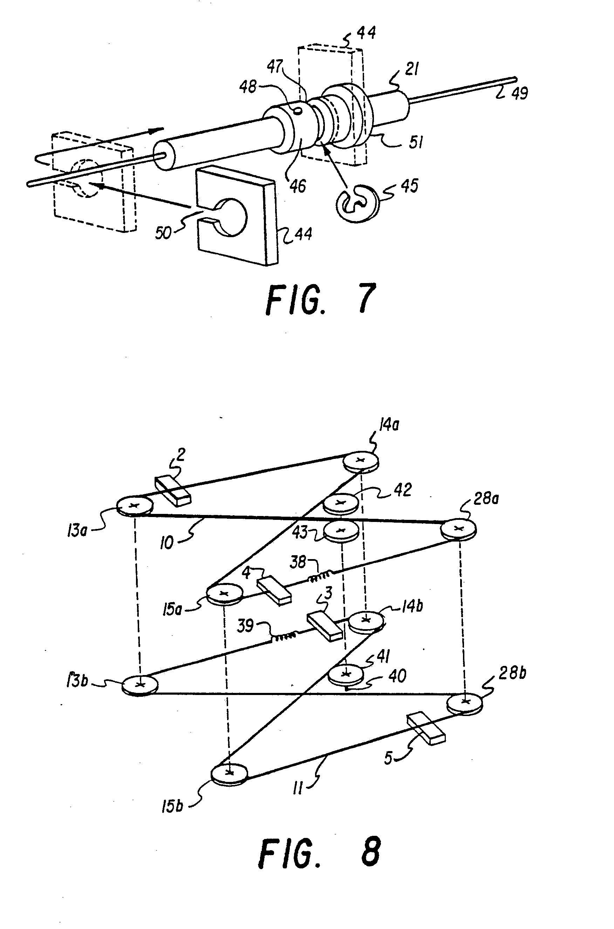

Referring to Figure 1, a high-speed printer comprises a main frame (support) 1, upon which the remaining components of the printer are mounted. Tractors 2 and 3, are slidably mounted on a metal rod 7 and on a shaft 9; additional tractors 4 and 5 are slidably mounted on a metal rod 6 and on a shaft 8. The shafts 8 and 9 are coupled to a stepper motor (not shown) which drives the tractors to advance the print paper through the printer (not shown) in the vertical direction viewing Figure 1. The left-hand tractor pair (pair of elements) 2 and 4 comprises the upper tractor 2 and the lower tractor 4 rigidly secured to the cable of a cable loop (linking means) 10 by tractor bracket assemblies which are shown in greater detail in Figure 7 and will be described more fully hereinafter. Similarly, the righthand tractor pair comprises the upper tractor 3 and the lower tractor (pair of elements) 5 secuted to the cable of a cable loop (linking means) 11 by tractor bracket assemblies (a tractor barrel 21 and a bracket 44 (see Figure 7 and description below) secure the tractor 5 to the cable 11, attachment apparatus for the remaining tractors 2, 3 and 4 not being shown). The cables 10 and 11 are routed on idling pulleys (routing means) 13, 14, 15 and 28 (the pulley 28 is shown in Figures 3 and 5 to 8) in a figure-of-eight configuration; the cable 10 is also routed around a tensioning pulley 17 mounted on an idler arm 16. Each pulley 13, 14, 15 and 28 consists of a pair of concentric pulley wheels; each pair of concentric pulley wheels is mounted on a common shaft rigidly secured to the main frame 1. A connector 22, in the form of a metal crimp-type connector, connects the ends of the cable 10 to form a continuous loop; the cable 11 is similarly connected (the connector for the cable 11 is not shown).

A drive pulley 12 consists of two identical pulley wheels having coincident centers and rigidly attached to a drive shaft coupled to a drive motor (the motor 29 of Figure 3) through a reduction gear 54 as shown in Figure 4. The drive pulley 12 is disposed such that it is tangential to a reach of each of the cables 10 and 11 between the pulleys 14 and 15, and each cable is wound around its respective drive pulley twice to provide coupling between the motor 29 and the cables 10, 11. Pushbutton-type switches 20 are provided for manual control of the motor to position the tractors. The motor inertia coupled through the high ratio reduction gear will maintain tractor position once set. The cable wrap coupling requires an initial tension in the cable to operate. A spring (not shown) is inserted in the cable loop 11 to maintain constant tension in the cable. Proper tension in the cable 10 is provided by the urging force of the pulley 17 mounted on the spring-loaded idler arm 16, against the cable 10. A hand-wheel or knob 19 is coupled to the idler arm 16 by a rigid linkage 18. Clockwise rotation of the knob 19 will disengage the pulley 17 from the cable 10 thereby releasing the tension in the cable 10. When the pulley 17 is disengaged, the right-hand pair of tractors 3 and 5 can be positioned independently of the lefthand pair of tractors 2 and 4. A cable brake (not shown) prevents any movement of the left-hand pair of tractors, 2 and 4, when the pulley 17 is disengaged. As a design choice, either the left-hand or the right-hand pair of tractors may be independently positioned to adjust the separation between the pairs of tractors to facilitate print paper of different widths.

Figure 2 illustrates the basic operation of the cable assembly. A cable 23 is routed around four passive routing elements 24, such as pulleys, in a figure-of-eight configuration. The cable can be steel or any other suitable material; the pulleys utilized are of machined aluminium, but could be molded plastics or other suitable material. To facilitate description of the operation, the cable 23 has been arbitrarily divided into sections. Elements 25 and 26 representing one tractor pair are fixedly attached to cable sections 23a and 23b, respectively, such that when the cable 23 moves, the elements 25 and 26 also move. When the cable section 23b is moved in the direction indicated by arrow 27, the remaining sections of cable 23 will move in the directions indicated by the small arrows 52, and the pulleys 24 will rotate in the directions indicated by the larger arrows 53. Since there is no slack in the cable, when the cable section 23b is moved in the direction indicated by the arrow 27 a distance d, the cable section 23a will move in the same direction as the cable section 23b through the same distance d. When the elements 25 and 26 are aligned relative to one another, movement of either of the elements will result in movement of the other element through the same distance in the same direction as the first element while maintaining relative alignment with respect to the first element. The pulleys 24 are positioned such that the centers of the pulleys 24a and 24b are the same distance apart as the centers of the pulleys 24c and 24d, and the cable section 23a is parallel to the cable section 23b. Hence, movement of the elements 25 and 27 will be along parallel paths.

Referring now to Figure 3, two cable loops 10 and 11 are routed around pulleys 13, 14, 15 and 28 in a figure-of-eight configuration. The tractor pair 2 and 4 is fixedly secured to the cable loop 10 and tractor pair 3 and 5 are fixedly attached to cable loop 11. The drive pulley 12 is a double pulley 12a and 12b as shown in Figure 4 and is coupled to the motor 29 by a drive shaft 31 through a reduction gear 54. The drive pulley 12 is located such that both cables 10 and 11 are tangential to the pulley. The cables 10 and 11 are coupled to the motor 29 by double wrapping each cable around its respective pulley 12b and 12a as shown in Figure 4. Rotational motion of the drive shaft 31 produces translational motion of the cables 10 and 11, thereby simultaneously moving both pairs of tractors.

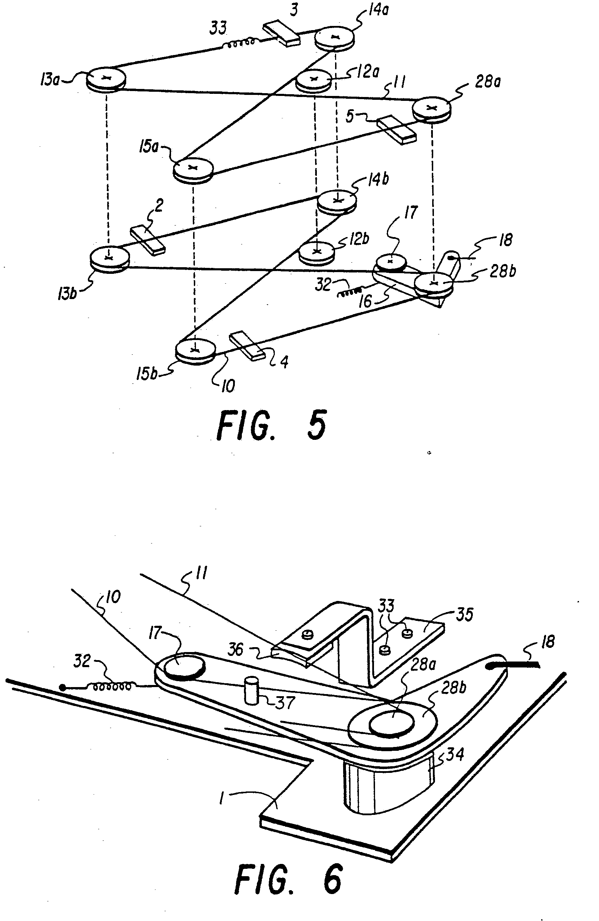

Referring now to Figure 5, a spring 33 is inserted in the cable loop 11 to maintain the proper tension required for the cable wrap to operate without slippage. The spring 33 is positioned in the cable loop 11 such that the motor pulley wheel 12a is coupled by the cable directly to a tractor 3 or 5 rather than through the spring 33 to ensure that any initial cable slack or stretch does not result in misalignment of the tractors 3 and 5. Pulley wheels 28a and 28b are rotationally mounted on a common shaft secured to the main frame 1 through the spring-loaded idler arm 16. The pulley wheel 17 mounted on the idler arm 16 is urged against the cable 10 by a spring 32 to maintain the required tension in the cable loop 10.

Referring now to Figure 6, the idler arm 16 and the pulley wheels 28a and 28b are mounted on a common shaft (not shown) attached to a standoff 34 which is an integral part of the printer main frame 1. The cable 11 is routed around the pulley wheel 28a only, while the cable 10 is routed around both the pulley wheel 28b and the pulley wheel 17. The spring 32 is attached between the printer main frame 1 and one end of the idler arm 16, thereby urging the pulley wheel 17 into engagement with the cable 10. When the pulley wheel 17 is engaged with the cable 10, the spring 32 acts as a tensioning spring in the cable loop 10 and the motor will drive both sets of tractors simultaneously.

The idler arm 16 is coupled to a control knob 19 (Figure 1) by a rigid linkage 18, as previously described with reference to Figure 1, to disengage the pulley wheel 17 from the cable 10. Since, when the tension is released, there is then insufficient tension in the left-hand cable loop 10 for the cable wrap to operate, the motor will only drive the right-hand set of tractors 3 and 5 (Figure 1). Clockwise rotation of the idler arm 16 will also clamp the cable 10 between a dowel pin 37 and a brake pad 36 to ensure that no movement of the left-hand pair of tractors 2 and 4 (Figure 1) occurs while repositioning the right-hand pair of tractors 3 and 5 (Figure 1). The brake pad 36 is mounted on a bracket 35 which is fixedly attached to the printer main frame 1 by screws 33. The brake pad 36 may be made of hard rubber or any other suitable material with a hardness of at least 60 shore A scale.

The tractors are attached to the cable in such a manner as to allow simple installation, removal and initial alignment. Figure 7 illustrates the tractor bracket assembly and installation and removal of the tractor bracket 44. Each cable reach 49 of the cable loops 10 and 11 of Figure 1, extending between the pulleys 13 and 14 between the pulleys 15 and 28 has a tractor barrel 21 crimped to the cable at each position that attachment of a tractor is desired and a tractor stop sleeve 46 is mounted on the tractor barrel 21. To install the tractor bracket 44, the cable 49 is slipped through a slot 50 and the tractor bracket 44 is then slid over the tractor stop sleeve 46 against a tractor stop (flange) 51. The tractor bracket 44 is held in position by an E-ring 45 in a slot 47 in the stop sleeve 46. Coarse alignment of the tractors is accomplished by positioning of the tractor barrel 21 prior to crimping it to the cable 49. Fine alignment of the tractors is accomplished by adjusting the position of the tractor stop sleeve 46 on the tractor barrel 21 and locking it in place with a set screw 48. The tractor bracket assembly components are constructed of metal or some other suitable material. The tractor stop sleeve 46 is constructed of brass or other suitable material.

Figure 8 illustrates another embodiment of the invention. The cable loops 10 and 11 are configured and operate as described above in connection with Figures 2 and 3. The tractors 2, 4, 3 and 5 are attached to the cables 10 and 11 as described above in connection with Figure 7. A spring 38 is inserted in the cable loop 10 and a spring 39 is inserted in the cable loop 11 to provide the cable tension required for the cable wrap drive (as described above in connection with Figure 4) to operate without cable slippage and to compensate for any cable stretch. A drive pulley 41 is rigidly attached to a shaft 40 and the shaft 40 is coupled to a drive motor (as shown in Figure 3) through a reduction gear (as shown in Figure 4). A drive pulley 42 is coupled to the drive pulley 41 by a clutching mechanism 43. When the clutching mechanism 43 is engaged, the drive pulley 42 is then rigidly coupled to the drive pulley 41 and rotational motion of the drive motor shaft 40 is transformed to translational motion of the cables 10 and 11, thereby driving both pairs of tractors simultaneously. When the clutching mechanism 43 is disengaged, the drive pulley 42 is mechanically isolated from the drive pulley 41 and the drive motor will translate the right-hand pair of tractors 3 and 5 but not the left-hand pair of tractors 2 and 4.

## Claims

1. A drive system for imparting translational motion to a plurality of pairs of elements, (2, 4; 3, 5) the elements of each pair having a fixed relationship with respect to each other, for moving a continuous web element, said drive system comprising a support (1),
   drive means (29) fixedly mounted on said support for providing rotational motion;
   at least two linking means (10, 11) coupled to the drive means;
   at least two pairs of said elements (2, 4; 3, 5) slidably coupled to the support for translational motion with respect to said support, each pair of said elements being fixedly attached to a respective one of said linking means; and
   a plurality of routing means (13, 14, 15, 28) disposed on said support for routing each of said linking means;
   characterized in that said routing means (13, 14, 15, 28) are disposed to form a figure-of-eight configuration of said linking means (10, 11) having two parallel legs, whereby each element of said pair of elements being fixedly attached to one of said two parallel legs, respectively,
   and in that said drive means (29) is formed by a single reversible drive motor which drives both of said linking means (10, 11) such that said linking means moves each element of said pair of elements in the same direction and the same distance along parallel paths with respect to said support.

2. A drive system according to claim 1, wherein each of said linking means (10, 11) comprises a continuous cable loop (10, 11); characterized in that
   tensioning means (32, 33) are included in said cable loop to tension said cable loop.

3. A drive system according to claim 2 characterized in that at least one cable loop includes a cable idler means (16, 17) to release the tension in said cable loop.

4. A drive system according to claim 3, characterized in that the cable idler means includes:
   an idler arm (16) rotationally mounted on said support (1) having an engaged position for imparting tension to the cable loop and a disengaged position for releasing said tension in said cable loop; and
   cable locking means (36, 37) to prevent movement of said pair of elements in response to rotational motion of said motor (29) when the idler arm (16) is rotated to said disengaged position.

5. A drive system according to claim 4, characterized in that the cable locking means comprises:
   pin means (37) fixedly mounted on the idler arm (16); and
   a braking means (36) fixedly mounted on said support (1) and positioned such that when the idler arm is rotated to the disengaged position said pin means urges said cable into engagement with said braking means.

6. A drive system according to one of Claims 1 to 5, characterized in that the drive means further includes:
   a high-ratio reduction gear (54) coupled to said reversible motor (29); and
   coupling means (12a, 12b) coupled to said reduction gear to provide coupling between the motor and the linking means.

7. A drive system according to claim 6 characterized in that the coupling means includes:
   at least two drive pulleys (12a, 12b) mounted on a common shaft (31) coupled to said reduction gears for providing coupling between the motor and the linking means; and
   clutch means (43) mounted on said common shaft (31) having an engaged position and a disengaged position, said engaged position for coupling all of said drive pulleys to said reduction gear and said disengaged position for decoupling at least one of said drive pulleys from said reduction gear.

8. A drive system according to any one of the preceding claims and for use in a high-speed printer, characterized in that each pair of elements provides a pair of paper-moving tractors.

9. A drive system according to claim 8 characterized in that the linking means further includes a plurality of tractor bracket assemblies (Figure 7) fixedly attached to said cable loop for mounting said tractors on said cable loop.

10. A drive system according to claim 9 characterized in that each tractor bracket assembly includes:
   a tractor barrel (21) fixedly attached to said cable loop;
   a cylindrical tractor stop sleeve (46) having an integrally molded flange (51) and adjacent slot (47), said stop sleeve being slidably mounted over said tractor barrel;
   a tractor bracket (44) removably mounted on said tractor stop sleeve;
   an E-type snap ring (45) for mounting in said slot and locking said tractor bracket against said flange; and
   a set screw (48) threaded through said tractor stop sleeve for locking said tractor stop sleeve in position to said tractor barrel.

## Patentansprüche

1. Antriebssystem zum Aufbringen einer Translationsbewegung auf mehrere Elementenpaare (2, 4; 3, 5), wobei die einzelnen Elemente eines jeden Paares in fester Relation zueinander stehen, zum Bewegen einer zusammenhängenden Papierbahn, wobei das Antriebssystem folgendes aufweist:

eine Halterung (1);

Antriebsmittel (29) zum Erzeugen einer Drehbewegung, die auf der Halterung befestigt sind;

wenigstens zwei mit den Antriebsmitteln gekoppelte Verbindungsmittel (10, 11);

wobei wenigstens zwei Elementenpaare (2, 4; 3, 5) für eine Translationsbewegung bezüglich der Halterung verschiebbar an der Halterung angebracht und an jeweils einem Verbindungsmittel befestigt sind, und

mehrere Umlenkmittel (13, 14, 15, 28) auf der Halterung zum Umlenken der Verbindungsmittel, dadurch gekennzeichnet,

daß die Umlenkmittel (13, 14, 15, 28) so angeordnet sind, daß die Verbindungsmittel (10, 11) die Gestalt der Ziffer Acht mit zwei parallelen Strängen bilden, wobei die einzelnen Elemente der Elementenpaare an jeweils einem der beiden parallelen Stränge befestigt sind, und

daß die Antriebsmittel (29) von einem einzigen in der Drehrichtung umkehrbaren Antriebsmotor gebildet sind, der beide Verbindungsmittel (10, 11) so antreibt, daß sie die Elemente jeweils eines Elementenpaares in derselben Richtung und über dieselbe Distanz entlang paralleler Wege bezüglich der Halterung bewegen.

2. Antriebssystem nach Anspruch 1, wobei jedes Verbindungsmittel (10, 11) eine zusammenhängende Seilschlaufe (10, 11) umfaßt, gekennzeichnet durch Spannmittel (32, 33) in der Seilschlaufe zum Spannen der Seilschlaufe.

3. Antriebssystem nach Anspruch 2, dadurch gekennzeichnet, daß wenigstens eine Seilschlaufe Mittel (16, 17) zum Entspannen der Seilschlaufte umfaßt.

4. Antriebssystem nach Anspruch 3, dadurch gekennzeichnet, daß die Mittel zum Entspannen umfassen:

—einen drehbar auf der Halterung (1) angebrachten Spannarm (16), der in eine die Seilschlaufe spannende, anliegende und eine die Spannung lösende, von der Seilschlaufe abgehobene Position bringbar ist,

—Seilverriegelungsmittel·(36, 37) zum Unterbinden jeder Bewegung des Elementenpaares infolge der Drehung des Motors (29), wenn der Spannarm (16) in abgehobener Position steht.

5. Antriebssystem nach Anspruch 4, dadurch gekennzeichnet, daß die Seilverriegelungsmittel umfassen:

—auf dem Spannarm (16) befestigte Stiftmittel (37); und

—Bremsmittel (36), die an der Halterung (1) befestigt und so positioniert sind, daß bei Schwenkung des Spannarmes in die abgehobene Position die Stiftmittel das Seil mit den Bremsmitteln in Eingriff bringen.

6. Antriebssystem nach einem der Ansprüche 1 bis 5, dadurch gekennzeichnet, daß die Antriebsmittel umfassen:

—ein stark untersetzendes, an den in seiner Drehrichtung umkehrbaren Motor (29) angeschlossenes Getriebe (54); und

—an das Untersetzungsgetriebe gekoppelte Anschlußmittel (12a, 12b) zum Anschließen der Verbindungsmittel an den Motor.

7. Antriebssystem nach Anspruch 6, dadurch gekennzeichnet, daß die Anschlußmittel umfassen:

—wenigstens zwei Antriebsriemenscheiben (12a, 12b) auf einer gemeinsamen Welle (31), welche mit dem Untersetzungsgetriebe verbunden ist, um dem Motor und die Verbindungsmittel miteinander zu kuppeln; und

—Kupplungsmittel (43) auf der gemeinsamen Welle (31), die in eine anliegende und eine abgehobene Position bringbar sind, wobei in der anliegenden Position alle Antriebsriemenscheiben an das Untersetzungsgetriebe angeschlossen sind und in der abgehobenen Position wenigstens eine Antriebsriemenscheibe von dem Untersetzungsgetriebe gelöst ist.

8. Antriebssystem nach einem der vorangehenden Ansprüche zum Einsatz in einem Hochgeschwindigkeitsdrucker, dadurch gekennzeichnet, daß jedes Elementenpaar ein Paar von Papiertransporttraktoren darstellt.

9. Antriebssystem nach Anspruch 8, dadurch gekennzeichnet, daß die Verbindungsmittel mehrere an der Seilschlaufe befestigte Traktorklammeranordnungen (Fig. 7) zum Befestigen der Traktoren an der Seilschlaufe umfassen.

10. Antriebssystem nach Anspruch 9, dadurch gekennzeichnet, daß jede Traktorklammeranordnung umfaßt:

—eine an der Seilschlaufe befestigte Traktorzylinderbüchse (21);

—eine zylindrische Traktorstopmuffe (46) mit einem damit einstückigen Flansch (51) und einer benachbarten Nut (47), wobei die Stopmuffe über die Traktorzylinderbüchse verschiebbar ist;

—eine abnehmbar auf der Traktorstopmuffe angebrachte Traktorklammer (44);

—einen E-förmigen Sprengring (45), der zum Verriegeln der Traktorklammer gegen den Flansch in der Nut angebracht wird; und

—eine in die Traktorstopmuffe eingeschraubte Stellschraube (48) zum Verriegeln der Traktorstopmuffe auf der Traktorzylinderbüchse.

**Revendications**

1. Un système d'entraînement pour communiquer un mouvement de translation à plusieurs paires d'éléments (2, 4; 3, 5), les éléments de chaque paire étant fixes l'un par rapport à l'autre, afin de déplacer un élément en bande continue, ce système d'entraînement comportant:

—un support (1),

—des moyens d'entraînement (29) montés fixes sur ce support de manière à procurer un mouvement de rotation,

—au moins deux moyens de liaison (10, 11) reliés aux moyens d'entraînement,

—au moins deux paires desdits éléments (2, 4;

3, 5) montées coulissantes sur le support afin de pouvoir se déplacer en translation par rapport à ce support, chaque paire de ces éléments étant montée fixe sur l'un des moyens de liaison respectifs, et

—une pluralité de moyens de guidage (13, 14, 15, 28) disposés sur le support de manière à guider chacun des moyens de liaison, caractérisé en ce que les moyens de guidage (13, 14, 15, 28) sont disposés de manière à former pour les moyens de liaison (10, 11) une configuration en forme de chiffre huit, avec deux branches parallèles, de sorte que chaque élément de la paire d'éléments soit monté fixe sur l'une de ces deux branches parallèles, respectivement,

et en ce que les moyens d'entraînement (29) sont formés par un moteur d'entraînement réversible unique qui entraîne les deux moyens de liaison (10, 11) de sorte que ces moyens de liaison déplacent chaque élément de la paire d'éléments dans le même sens et sur la même longueur le long et trajets parallèles par rapport au support.

2. Le système d'entraînement de la revendication 1, dans lequel chacun des moyens de liaison (10, 11) comprend une boucle de câble continue (10, 11), caractérisé en ce que des moyens de tension (32, 33) sont incorporés à cette boucle de câble afin de mettre sous tension la boucle de câble.

3. Le système d'entraînement de la revendication 2, caractérisé en ce qu'au moins l'une des boucles de câble comprend des moyens oscillants (16, 17) permettant de relâcher la tension de la boucle de câble.

4. Le système d'entraînement de la revendication 3, caractérisé en ce que les moyens oscillants comprennent:

—un bras oscillant (16) monté en rotation sur le support (1), avec une position en prise permettant d'appliquer une tension à la boucle de câble et une position dégagée permettant de relâcher cette tension de la boucle de câble, et

—des moyens de verrouillage de câble (36, 37) empêchant le mouvement de la paire d'éléments en réponse au mouvement de rotation du moteur (29) lorsque l'on fait tourner le bras oscillant (16) vers sa position dégagée.

5. Le système d'entraînement de la revendication 4, caractérisé en ce que les moyens de verrouillage de câble comprennent:

—des moyens à goupille (37) montés fixes sur le bras oscillant (16), et

—des moyens de freinage (36) montés fixes sur le support (1) et placés de sorte que, lorsque l'on fait tourner le bras oscillant vers sa position dégagée, les moyens à goupille viennent appliquer le câble en contact contre les moyens de freinage.

6. Le système d'entraînement de l'une des revendications 1 à 5, caractérisé en ce que les moyens d'entraînement comprennent en outre:

—un train réducteur à rapport élevé (54) relié au moteur réversible (29), et

—des moyens de couplage (12a, 12b) reliés au train réducteur afin d'assurer un couplage entre le moteur et les moyens de liaison.

7. Le système d'entraînement de la revendication 6, caractérisé en ce que les moyens de couplage comprennent:

—au moins deux poulies d'entraînement (12a, 12b) montées sur un arbre commun (31) relié au train réducteur pour assurer un couplage entre le moteur et les moyens de liaison, et

—des moyens d'embrayage (43) montés sur cet arbre commun (31), avec une position en prise et une position débrayée, la position en prise servant à accoupler toutes les poulies d'entraînement au train réducteur, et la position débrayée servant à découpler du train réducteur au moins l'une des poulies d'entraînement.

8. Le système d'entraînement de l'une des revendications précédentes, pour une imprimante à grande vitesse, caractérisé en ce que chaque paire d'éléments constitue une paire d'entraîneurs de déplacement du papier.

9. Le système d'entraînement de la revendication 8, caractérisé en ce que les moyens de liaison comportent en outre une pluralité d'ensembles à taquet d'entraîneur (figure 7) montés fixes sur la boucle de câble afin d'assurer l'installation des entraîneurs sur cette boucle de câble.

10. Le système d'entraînement de la revendication 9, caractérisé en ce que chaque ensemble à taquet d'entraîneur comprend:

—un cylindre d'entraîneur (21) monté fixe sur la boucle de câble;

—un manchon cylindrique de butée d'entraîneur (46) comportant un flasque moulé monobloc (51) et une fente adjacente (47), ce manchon de butée étant monté coulissant sur le cylindre d'entraîneur,

—un taquet d'entraîneur (44) monté de façon amovible sur le manchon de butée d'entraîneur,

—une bague à encliquetage en forme de E (45) pour monter dans la fente le taquet d'entraîneur et le verrouiller contre le flasque, et

—une vis de réglage (48) vissée dans le manchon de butée d'entraîneur afin de verrouiller en position le manchon de butée d'entraîneur sur le cylindre d'entraîneur.

0 141 545

FIG. 1

HORIZONTAL ALIGNMENT

FIG. 2

1

FIG. 3

FIG. 4

FIG. 5

FIG. 6

FIG. 7

FIG. 8